# EUROPEAN PATENT SPECIFICATION

(11) **EP 4 025 532 B1**
(45) Date of publication and mention of the grant of the patent: **08.07.2026**
(21) Application number: 20861824.9
(22) Date of filing: 08.09.2020
(51) Int. Cl.: A23L 2/54, B01F 23/232, B01F 23/236, B01F 23/237, B01F 35/22, G06Q 10/08, G06Q 10/20, G06Q 10/087

(54) **IN-LINE GAS LIQUID INFUSION SMART SYSTEM**
IN-LINE-GAS-FLÜSSIGKEITSINFUSIONS-SMART-SYSTEM
SYSTÈME INTELLIGENT DE PERFUSION DE LIQUIDE GAZEUX EN LIGNE

(30) Priority: 06.09.2019 US 201962896795 P
(43) Date of publication of application: 13.07.2022
(73) Proprietor: Flow Control LLC., Beverly, Massachusetts 01915 (US)
(72) Inventor: MEZA, Humberto V., Trabuco Canyon, California 92679 (US); TRAN, Derrick, Yorba Linda, California 92886 (US); ESTRADA, Jesus, Gloucester, Massachusetts 01930 (US); PATEL, Akshaykumar, Santa Ana, California 92704 (US)
(74) Representative: Wörz, Volker Alfred
(86) International application number: PCT/US2020/049637
(87) International publication number: WO 2021/046503

(56) References cited:
- WO-A1-2011/000021
- WO-A1-2018/236758
- WO-A2-2009/032941
- US-A1- 2006 113 322
- US-A1- 2015 024 088
- US-A1- 2017 190 555
- US-A1- 2018 085 723
- US-A1- 2018 280 896
- US-A1- 2018 280 896

## Description

### CROSS-REFERENCE TO RELATED APPLICATION

This application claims benefit to provisional patent application serial no. 62/896,795, filed 6 September 2019.

### BACKGROUND OF THE INVENTION

### 1. Field of the Invention

The present invention relates to an in-line gas liquid infusion smart system according to claim 1, comprising *inter alia*:
components adapted to dispense a non-infused liquid and a gas-infused mixture of gas and liquid from a dispense point of the in-line gas liquid infusion smart system,
a remote controller for controlling, monitoring and troubleshooting the in-line gas liquid infusion smart system, and
a smart controller having a signal processor.
The gas liquid infusion system is configured, e.g., for mixing, infusing or carbonating beverage liquids (such as coffee, tea, milk, soda, beer, wine, spirits and industrial fluids) with a gas (such as nitrogen (N2), or carbon dioxide (CO2), or a blend of N2 and CO2).

### 2. Brief Description of Related Art

Prior art reference US 2006/ 113 322 A1 discloses a technique for monitoring a beverage dispensing system for rendering a conclusion to a user, operator or service technician, e.g., including providing a temperature, pressure or CO2 level alarm.

The following dispensing systems are known in the art and dispense infused coffee through their proprietary mixing devices without any monitoring/controlling and data communication means.
- Bunn Nitron Cold Brew (See https://www.bunn.com/Iced_and _Cold_Draft_Coffee);
- Cornelius Nitropro (See http://nitropro-cornelius.com/);
- Joetap (See http://joetap.com/home/); and
- Micromatic (See https://www.micromatic.com/nitro-cold-brew-coffee-on-tap).

Shortcomings of the Above Mentioned Devices:
The above mentioned systems lack the following:
- Consistency in drink quality,
- System component operating data collection,
- Remote monitoring/controlling,
- Data communication/loT connectivity, and
- Flexibility/customization.

There is a need in the industry for a better way to infuse gas and liquid for dispensing beverages in restaurants, coffee shops, bars, and convenience stores, etc.

### SUMMARY OF THE PRESENT INVENTION

To meet this need, the invention is directed to an in-line gas liquid infusion smart system, the above-mentioned kind, according to claim 1.

In summary, the present invention provides smart infusion systems that utilize available devices like one or more pressure sensors, liquid detection devices, flow meters, gas fittings/orifices, and electronics control boards to monitor and control the desired outputs of the mixtures. They also provide data communication through local networks or loT devices for either technical or business data collection and analysis; it also provides the means to troubleshoot, monitor and control the systems remotely.

### Other Features

The in-line gas liquid infusion smart system may include one or more of the following features:
The controller may be configured to exchange the signaling and the corresponding signaling with the remote controller through a local network gateway to a cloud server, including exchanging the data communication signaling.

The pump operating parameters may include speed, voltage, current and pressure of a pump providing the non-infused liquid to a gas liquid absorption device (GLAD);
the dispense information may include a pour time stamp and a type of drink of the gas-infused mixture dispensed, and a keg change of a liquid or gas processed; and
the system parameters may include a gas pressure and a liquid pressure of the liquid or gas processed and a mode of operation of the in-line gas liquid infusion smart system.

The remote controller may be configured to
receive the corresponding signaling; and
determine business analysis data signaling containing information about business analysis data regarding the inline gas infusion smart system, including:
   - product consumption information,
   - power consumption information,
   - peak demand time information, and
   - inventory management information.

The remote controller may be configured to
receive the corresponding signaling; and
determine technical trouble shooting data signaling containing information about technical trouble shooting data for controlling the in-line gas liquid infusion smart system, including information about:
   - Pump behaviors and life expectancy,
   - Changes in system operating parameters, and
   - Sequences of last modes of operations.

The remote controller may be configured to
receive remote user input signaling (e.g., from a remote operator) containing information about changing one or more of the parameters or settings of one or more of the components in the in-line gas liquid infusion smart system; and
provide remote controller signaling containing further corresponding information about controlling, monitoring or troubleshooting the components in the in-line gas liquid infusion smart system, including changing one or more parameters or settings related to the operation of the components in the in-line gas liquid infusion smart system for providing to the smart controller.

The gas-infused mixture may be a gas-infused beverage; the gas may include nitrogen (N2), carbon dioxide (CO2) or a blend of both; and the gas-infused beverage may include an N2 infused beverage, a CO2 infused beverage, or a blended N2 and CO2 infused beverage.

The gas-infused mixture may be a gas-infused beverage; the non-infused liquid may include coffee, tea, milk, beer, soda, juice, water, wine, or spirit; and the gas-infused beverage may include a gas-infused coffee, tea, milk, beer, soda, juice, water, wine, or spirit beverage.

The in-line gas liquid infusion smart system may be an industrial system; and the gas-infused mixture may be a gas-infused industrial mixture having a desired ratio of one or more gases and/or liquids for an industrial process application.

The components may include a GLAD configured to receive the non-infused liquid from a liquid source, receive one or more gases from one or more gas sources, and provide the gas-infused mixture to the dispense point.

The liquid source may include a pump, including a motor driven or air driven diaphragm pump, configured to pump the non-infused liquid to the GLAD, including where the motor driven or air driven diaphragm pump responds to the control signaling and pumps the non-infused liquid to the GLAD.

The components may include a gas solenoid valve configured to provide a gas from a gas source for driving the gas driven diaphragm pump, including where the gas solenoid valve responds to the control signaling and provides the gas from the gas source for driving the gas driven diaphragm pump.

The components may include a gas pressure sensor configured to provide gas pressure sensor signaling containing information about the pressure of the gas provided for driving the gas driven diaphragm pump, including where the gas pressure sensor provides the gas pressure sensor signaling to the controller.

The components may include tubing configured to provide and recycle an exhaust gas provided from the gas driven diaphragm pump to a gas source providing the gases.

The components may include one or more gas solenoid valves configured to provide the one or more gases from the one or more gas sources to the GLAD, including where the one or more gas solenoid valves responds to the control signaling and provides the one or more gases from the one or more gas sources to the GLAD.

The components may include one or more gas pressure sensors configured to provide gas pressure sensor signaling containing information about one or more gas pressures of the one or more gases provided to the GLAD, including where the one or more gas pressure sensors provides the gas pressure sensor signaling containing information about the one or more gas pressures of the one or more gases provided to the GLAD to the controller.

The components system may include a non-infused liquid solenoid valve configured to provide the non-infused liquid from the GLAD to the dispense point, and may also include a mixture solenoid valve configured to provide the gas-infused mixture to the dispense point, including where the non-infused liquid solenoid valve respond to the control signaling and provides the non-infused liquid from the GLAD to the dispense point, and also including where the mixture solenoid valve responds to the control signaling and provides the gas-infused mixture to the dispense point.

The components may include a liquid flow sensor arranged between the motor driven pump and the pressurized liquid container/bag-in-box (BIB)/bottle configured to provide liquid flow sensor signaling containing information about the liquid flow from the pressurized liquid container/bag-in-box (BIB)/bottle to the motor driven pump, including including where the liquid flow sensor provides the liquid flow sensor signaling to the controller.

### The Controller

By way of further example, and according to some embodiments, the present invention may include, or take the form of, a smart controller for an in-line gas liquid infusion smart system, featuring a signal processor configured to:
receive signaling containing information about parameters or settings related to dispensing from the dispense point the non-infused liquid and the gas-infused mixture; and
determine corresponding signaling containing information to dispense the non-infused liquid and the gas-infused mixture from the dispense point, and also containing further information about the parameters or settings for providing to the remote controller, based upon the signaling received, and
provide the corresponding signaling as control signaling to control the components of the in-line gas liquid infusion smart system in order to dispense the non-infused liquid and the gas-infused mixture from the dispense point, as well as data communication signaling to the remote controller.

A remote controller for controlling, monitoring and troubleshooting the in-line gas liquid infusion smart system is configured to
receive the corresponding signaling, and
provide remote controller signaling containing further corresponding information about controlling, monitoring and troubleshooting the components in the in-line gas liquid infusion smart system, including changing one or more of the parameters or settings related to the operation of components in the in-line gas liquid infusion smart system, wherein the parameters or settings include gas-liquid infusion settings, pump operating parameters, dispense information and system parameters.

The smart controller is further configured to receive the remote controller signaling and determine the corresponding signaling to dispense the non-infused liquid and the gas-infused mixture from the dispense point (38), based upon the remote controller signaling.

### BRIEF DESCRIPTION OF THE DRAWING

The drawing, which is not necessarily drawn to scale, includes the following Figures:

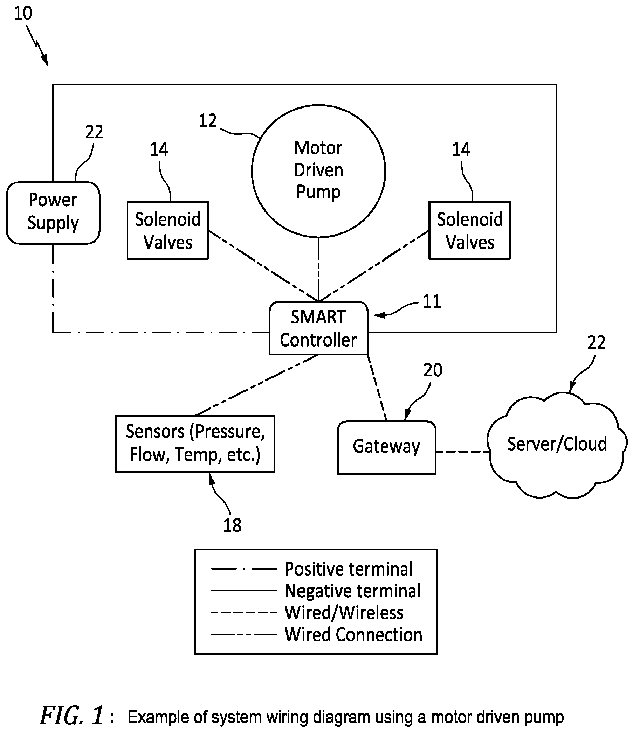

Figure 1 is an example of a system wiring diagram using a motor driven pump, e.g., for an in-line gas liquid infusion smart system having a smart controller configured to receive parameter and setting signaling from, and provide control signaling to, some combination of the motor driven pump, solenoid valves, sensors (pressure, flow and temperature, etc.), and a local network gateway for providing parameters or settings related to the operation of the in-line gas liquid infusion smart system to a server/cloud, as well as to dispense a gas-infused mixture from the in-line gas liquid infusion smart system, according to some embodiments of the present invention.

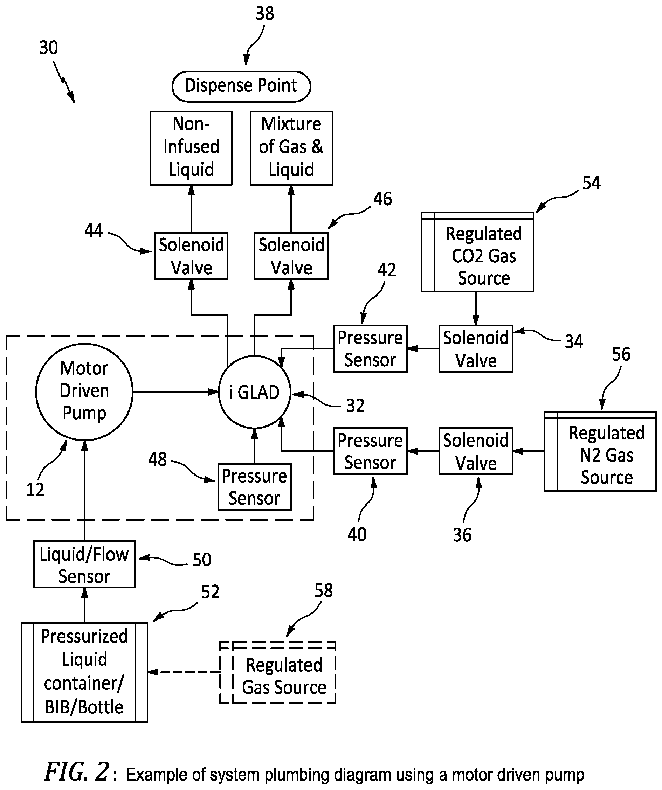

Figure 2 is another example of a system plumbing diagram using a motor driven pump, e.g., for an in-line gas liquid infusion smart system having a GLAD configured to receive one or more gases from one or more solenoid valves and a non-infused liquid from the motor driven pump, and provide the non-infused liquid and a mixture of the gas and liquid to a dispense point to dispense a gas/liquid infused drink or beverage, according to some embodiments of the present invention.

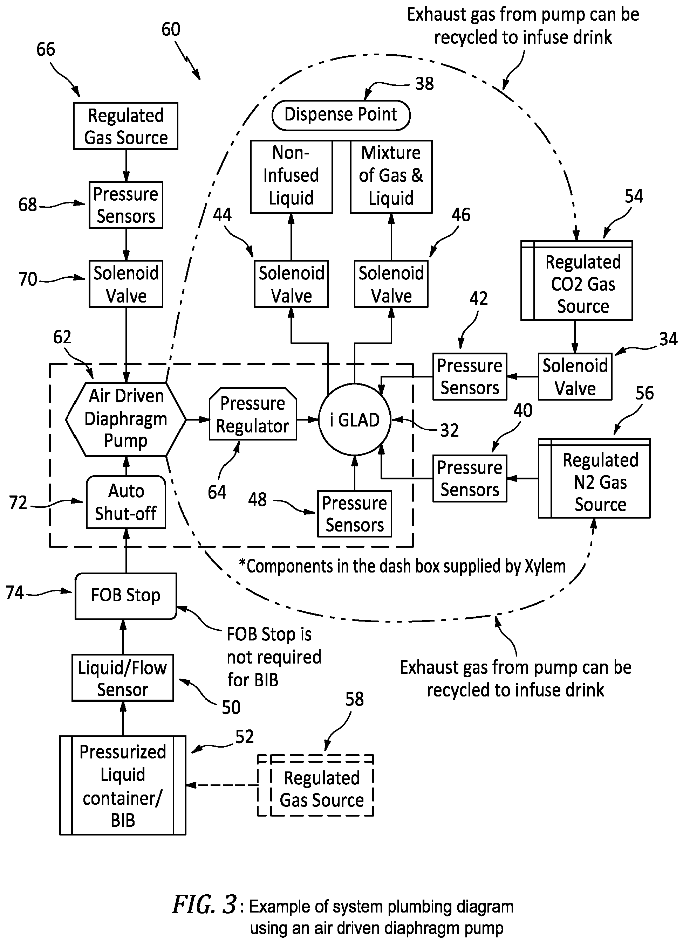

Figure 3 is still another example of a system plumbing diagram using an air driven diaphragm pump, e.g., for an in-line gas liquid infusion smart system having a GLAD configured to receive one or more gases from one or more solenoid valves and a non-infused liquid from the motor driven pump, and provide the non-infused liquid and a mixture of the gas and liquid to a dispense point to dispense a gas/liquid infused beverage, where exhaust gas from the air driven diaphragm pump can be recycled to infuse the gas/liquid infused drink or beverage, according to some embodiments of the present invention.

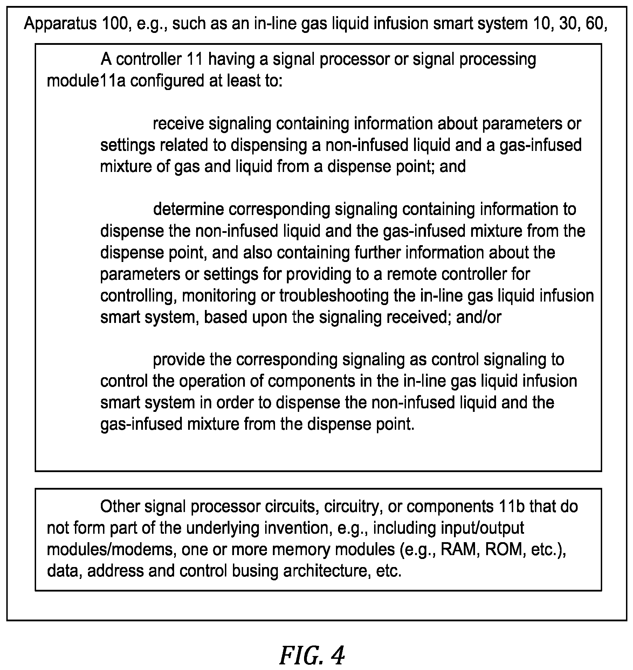

Figure 4 is a block diagram of an in-line gas liquid infusion smart system like that shown in Figures 1-3 having a smart controller configured to implement the underlying signal processing functionality.

Similar parts or components in Figures are labeled with similar reference numerals and labels for consistency. Every lead line and associated reference label for every element is not included in every Figure of the drawing to reduce clutter in the drawing as a whole.

### DETAILED DESCRIPTION OF THE INVENTION

In general, Figures 1, 2 and 3 show diagrams of infusion plumbing systems using a motor or air operating pump, according to some embodiments of the present invention. A smart controller like that shown in Figure 1 forms part of each system and adds data communication capability to the respective system, which allows communication through a local network gateway to a cloud server for transfer of information, e.g., for implementing remote monitoring and control of the infusion plumbing systems.

Below are some examples of a list of information that the infusion plumbing systems can transfer to the cloud server:
- A Gas-Liquid Infusion setting, e.g., for controlling components of the inline gas liquid infusion smart system,
- Pump operating parameters: Speed, Voltage, Current and Pressure, e.g., for controlling the pump,
- Dispense information: Pour time stamp, type of drink and keg change, and
- System parameters: Gas pressure, Liquid pressure and Mode of operation.

Based on information collected on the server/cloud, infusion plumbing system usage information can be calculated for business analysis and technical troubleshooting. The following are some of the examples for business analysis data:
- Product consumption information,
- Power consumption information,
- Peak demand time information, and
- Inventory management information.

The following are some of the examples for technical troubleshooting data:
- Pump behaviors and life expectancy,
- Changes in system operating parameters, and
- Sequence of last modes of operations,

### Figure 1

In particular, and by way of example, Figure 1 shows an in-line gas liquid infusion smart system generally indicated as 10 having a smart controller 11 configured to receive parameter and setting signaling from, and provide control signaling to, some combination of the motor driven pump 12, solenoid valves 14, 16, sensors 18 (e.g., including for sensing pressure, flow and temperature, etc.), and a local network gateway 20 that provides gateway signaling containing information about parameters or settings related to the operation of the in-line gas liquid infusion smart system 10 to a server/cloud 22, consistent with that set forth herein. The smart controller 11 is configured to provide the control signaling to control components of the in-line gas liquid infusion smart system 10 in order to dispense a gas-infused mixture from a dispense point 38 (Figs. 2 and 3), also consistent with that set forth herein. The in-line gas liquid infusion smart system 10 includes a power supply 23, e.g., to provide power to the components, including the smart controller 11 as shown. In Figure 1, wired connections are shown as solid lines, and wireless connections are shown as dotted lines.

### Figure 2

Figure 2 shows an in-line gas liquid infusion smart system generally indicated as 30 having a GLAD 32 configured to receive one or more gases (e.g., CO2 and/or N2) from one or more solenoid valves 34, 36 and a non-infused liquid (e.g., coffee or tea) from the motor driven pump 12, and provide the non-infused liquid and a mixture of the gas and liquid to a dispense point 38 to dispense a gas/liquid infused drink or beverage. The in-line gas liquid infusion smart system 30 may include pressure sensors 40, 42 configured to sense the gas pressure of the one or more gases (e.g., CO2 and/or N2) provided from the one or more solenoid valves 34, 36 to the GLAD 32. The in-line gas liquid infusion smart system 30 may include non-infused liquid valve 44 and mixture solenoid valve 46 configured to provide the non-infused liquid and the mixture of gas and liquid to the dispense point 38. The in-line gas liquid infusion smart system 30 may include a GLAD pressure sensor 48 configured to sense the pressure of the one or more gases, the non-infused liquid and the mixture of gas and liquid being processed by the GLAD 32. The in-line gas liquid infusion smart system may include a liquid/flow sensor 50 configured to sense the flow of the non-infused liquid provided from a pressurized liquid container, box-in-bag (BIB) or bottle 52 to the GLAD 32. The in-line gas liquid infusion smart system may include regulated gas sources 54, 56, 58, e.g., for providing regulated gas, such as CO2, N2 or air to the one or more solenoid valves 34, 36 and/or the pressurized liquid container, box-in-bag (BIB) or bottle 52.

In operation, and by way of example, the smart controller 11 in Figure 1 may be configured to receive the parameter and setting signaling from some combination of the motor driven pump 12, solenoid valves 34, 36, sensors 40, 42, 48, 50; and may also be configured to provide the control signaling to the solenoid valves 34, 36, 44, 46, motor driven pump 12, and dispense point 38 to dispense the gas/liquid infused drink or beverage.

### Figure 3

Figure 3 shows an in-line gas liquid infusion smart system generally indicated as 60, e.g., having an air driven diaphragm pump 62, as well as many similar parts or components as the system 30 in Figure 2 that are labeled with similar reference numerals and labels for consistency.

In Figure 3, the in-line gas liquid infusion smart system 60 may include a pressure regulator 64 arranged between the GLAD 32 and the air driven diaphragm pump 62 and configured to regulate the pressure of the non-infused liquid provided from the air driven diaphragm pump 62 to the GLAD 32. The in-line gas liquid infusion smart system 60 may include a combination of a regulated gas source 66, one or more pressure sensors 68 and a solenoid valve 70 configured to provide a gas (e.g., such as air) to drive the air driven diaphragm pump 62. The in-line gas liquid infusion smart system 60 may include a combination of an auto shut off 72 and an FOB stop 74 arranged between the liquid/flow sensor 50 and the air driven diaphragm pump 62 and configured to provide automatic shutoff and FOB stop functionality in relation to the non-infused liquid provided from the pressurized liquid container or bottle 52 to the air driven diaphragm pump 62. The FOB stop is not required for BIB implementations.

In operation, and by way of example, the smart controller 11 (Figure 1) may be configured to receive the parameter and setting signaling from some combination of the air driven diaphragm pump 62, solenoid valves 34, 36, 70, sensors 40, 42, 48, 50, 68, auto shut off 72, and FOB stop 74; and may also be configured to provide the control signaling to the solenoid valves 34, 44, 46, 72, air driven diaphragm pump 62, and dispense point 38 to dispense the gas/liquid infused drink or beverage.

In contrast to that shown in Figure 2, the system 60 in Figure 3 does not include a solenoid 36; however, the system 60 may be implemented with such a solenoid 36.

### Figure 4

Figure 4 shows a block diagram of the in-line gas liquid infusion smart system like elements 10, 30, or 60, having the smart controller 11 with a signal processor or signal processing module 11a configured at least to:
receive signaling containing information about parameters or settings related to dispensing a non-infused liquid and a gas-infused mixture of gas and liquid from a dispense point;
determine corresponding signaling containing information to dispense the non-infused liquid and the gas-infused mixture from the dispense point, and also containing further information about the parameters or settings for providing to a remote controller for controlling, monitoring or troubleshooting the in-line gas liquid infusion smart system, e.g., that forms part of the server/cloud 22, based upon the signaling received; and/or
provide the corresponding signaling as control signaling to control the operation of components in the in-line gas liquid infusion smart system in order to dispense the non-infused liquid and the gas-infused mixture from the dispense point.

The smart system 100 may include other signal processor circuits, circuitry, or components 11b that do not form part of the underlying invention, e.g., including input/output modules/modems, one or more memory modules (e.g., RAM, ROM, etc.), data, address and control busing architecture, etc.

### Possible Applications:

By way of example, the in-line gas liquid infusion smart systems 10, 30, 60 are used for providing gas (N2, CO2, N2+CO2) infused beverages such as coffee, tea, milk, beer, soda, juice, water, wine, spirit, etc. These in-line gas liquid infusion smart systems 10, 30, 60 can also be used to mix different gases and/or liquids to a desired ratio for industrial process applications.

By way of further example, the in-line gas liquid infusion smart system 10, 30, 60 may include, or take the form of, a commercial beverage dispensing machine in restaurants, coffee shops, bars, and convenience stores, etc., as well as an industrial dispensing machine.

### GLAD 32

GLADs 32 are known in the art, and the invention is not intended to be limited to any particular type or kind thereof.

By way of example, see patent application serial no. 16/875,490, filed 15 May 2020 (Docket no. 911-005.098-2 (F-FLJ-X0033US01), which claims benefit to provisional patent application serial no. 62/848,148, filed 15 May 2019, which is assigned to the assignee of the instant application.

By way of example, see patent application serial no. 16/830,960, filed 26 March 2020 (Docket no. 911-005.097-2 (F-FLJ-X0032US01), which claims benefit to provisional patent application serial no. 62/823,841, filed 26 March 2019, which is assigned to the assignee of the instant application and discloses an example of a GLAD.

By way of further example, see also Serial no. 15/938,512, filed 28 March 2018 (Docket no. 911-005.094-2 (F-FLJ-X0029US01), which claims benefit to Serial no. 62/477,745, filed 28 March 2017, entitled "Gas/liquid infusion system with intelligent level management and adjustable absorption output".

By way of still further example, see also US Patent No. 9,033,315, issued 19 May 2015 (Docket no. 911-005.065-2 (M-FLJ-1101US01), entitled "Adjustable in-line on demand carbonator chamber for beverage applications".

### The Dispense Point 38

Dispense points 38 are known in the art, and the invention is not intended to be limited to any particular type or kind thereof.

By way of example, and according to some embodiments, the dispense point 38 may include a dispense point controller configured to receive the control signaling from the smart controller 11 to implement dispense point functionality related to dispensing the non-infused liquid and the gas-infused mixture, and also configured to provide dispense point controller signaling to the smart controller 11 containing information about the dispense point controller functionality implemented and related to dispensing the non-infused liquid and the gas-infused mixture.

### Liquid and Gas Pressure Sensors and Other Devices

Liquid and gas pressure sensors and liquid flow sensors are known in the art, and the invention is not intended to be limited to any particular type or kind thereof.

Solenoid valves are known in the art, and the invention is not intended to be limited to any particular type or kind thereof.

Motor driven pumps, infusion tank/vessels, etc. are also known in the art, and the invention is not intended to be limited to any particular type or kind thereof.

### The Invention

The embodiments shown and described in detail herein are provided by way of example only; and the invention is not intended to be limited to the particular configurations, dimensionalities, and/or design details of these parts or elements included herein, that is one skilled in the art would appreciate that design changes to these embodiments may be made and such that the resulting embodiments would be different than the embodiments disclosed herein, but would still be within the present invention as defined by the claims.

## Claims

1. An in-line gas liquid infusion smart system (10; 30; 60), comprising:
components adapted to dispense a non-infused liquid and a gas-infused mixture of gas and liquid from a dispense point (38) of the in-line gas liquid infusion smart system (10; 30; 60),
a remote controller for controlling, monitoring and troubleshooting the in-line gas liquid infusion smart system (10; 30; 60), and
a smart controller (11) having a signal processor (11a) configured to
receive signaling containing information about parameters or settings related to dispensing from the dispense point (38) the non-infused liquid and the gas-infused mixture; and
determine corresponding signaling containing information to dispense the non-infused liquid and the gas-infused mixture from the dispense point (38), and also containing further information about the parameters or settings for providing to the remote controller, based upon the signaling received, and
provide the corresponding signaling as control signaling to control the components of the in-line gas liquid infusion smart system (10; 30; 60) in order to dispense the non-infused liquid and the gas-infused mixture from the dispense point (38), as well as data communication signaling to the remote controller, and wherein the remote controller is configured to
receive the corresponding signaling, and
provide remote controller signaling containing further corresponding information about controlling, monitoring and troubleshooting the components in the in-line gas liquid infusion smart system (10; 30; 60), including changing one or more of the parameters or settings related to the operation of components in the in-line gas liquid infusion smart system (10; 30; 60);
wherein the smart controller (11) is configured to receive the remote controller signaling and determine the corresponding signaling to dispense the non-infused liquid and the gas-infused mixture from the dispense point (38), based upon the remote controller signaling, and
wherein the parameters or settings include gas-liquid infusion settings, pump operating parameters, dispense information and system parameters.

2. The in-line gas liquid infusion smart system (10; 30; 60) according to claim 1, wherein the smart controller (11) is configured to exchange the signaling and the corresponding signaling with the remote controller through a local network gateway (20) to a cloud server (22).

3. The in-line gas liquid infusion smart system (10; 30; 60) according to claim 1, wherein
the pump operating parameters include speed, voltage, current and pressure of a pump (12) providing the non-infused liquid to a gas liquid absorption device (32), referred to hereinafter as GLAD;
the dispense information includes a pour time stamp and a type of drink of the gas-infused mixture dispensed, and a keg change of a liquid or gas processed; and
the system parameters include a gas pressure and a liquid pressure of the liquid or gas processed and a mode of operation of the in-line gas liquid infusion smart system (10; 30; 60).

4. The in-line gas liquid infusion smart system (10; 30; 60) according to claim 1, wherein the remote controller is configured to
determine business analysis data signaling containing information about business analysis data, including information about:
• product consumption information,
• power consumption information,
• peak demand time information, and
• inventory management information.

5. The in-line gas liquid infusion smart system (10; 30; 60) according to claim 1, wherein the remote controller is configured to
determine technical trouble shooting data signaling containing information about technical trouble shooting data for controlling the in-line gas liquid infusion smart system (10; 30; 60), including:
• Pump behaviors and life expectancy,
• Changes in system operating parameters, and
• Sequences of last modes of operations; and
wherein preferably the remote controller is configured to
receive remote user input signaling containing information about changing one or more of the parameters or settings of one or more components in the in-line gas liquid infusion smart system (10; 30; 60); and
provide remote controller signaling containing the further corresponding information about controlling, monitoring or troubleshooting the components in the in-line gas liquid infusion smart system (10; 30; 60), including changing one or more parameters or settings related to the operation of the components in the in-line gas liquid infusion smart system (10; 30; 60) for providing to the smart controller (11).

6. The in-line gas liquid infusion smart system (10; 30; 60) according to claim 1, wherein the gas-infused mixture is a gas-infused beverage; the gas includes nitrogen (N2), carbon dioxide (CO2), or both; and the gas-infused beverage includes an N2 infused beverage, a CO2 infused beverage, or an N2 and CO2 infused beverage.

7. The in-line gas liquid infusion smart system (10; 30; 60) according to claim 1, wherein the gas-infused mixture is a gas-infused beverage; the non-infused liquid includes coffee, tea, milk, beer, soda, juice, water, wine, or spirit; and the gas-infused beverage includes a gas-infused coffee, tea, milk, beer, soda, juice, water, wine, or spirit beverage.

8. The in-line gas liquid infusion smart system (10; 30; 60) according to claim 1, wherein the in-line gas liquid infusion smart system (10; 30; 60) is an industrial system; the gas-infused mixture is a gas-infused industrial mixture having a desired ratio of one or more gases and liquids for an industrial process application.

9. The in-line gas liquid infusion smart system (10; 30; 60) according to claim 1, wherein the in-line gas liquid infusion smart system (10; 30; 60) comprises components that include a gas liquid absorption device (32), referred to hereinafter as GLAD, configured to receive the non-infused liquid from a liquid source (52), receive one or more gases from one or more gas sources (54; 56), and provide the non-infused liquid and the gas-infused mixture to the dispense point (38), and wherein preferably the liquid source (52) comprises a pump (12; 62), including a motor driven or air driven diaphragm pump, configured to pump the liquid to the GLAD (32).

10. The in-line gas liquid infusion smart system (10; 30; 60) according to claim 9, wherein the components comprise a gas solenoid valve (70) configured to provide a gas from a gas source (66) for driving the gas driven diaphragm pump (62).

11. The in-line gas liquid infusion smart system (10; 30; 60) according to claim 9, wherein the components comprise a gas pressure sensor (68) configured to provide gas pressure sensor signaling containing information about the pressure of the gas provided for driving the gas driven diaphragm pump (62).

12. The in-line gas liquid infusion smart system (10; 30; 60) according to claim 9, wherein the components comprise tubing configured to provide and recycle an exhaust gas provided from the gas driven diaphragm pump (62) to a gas source (54; 56) providing the gases.

13. The in-line gas liquid infusion smart system (10; 30; 60) according to claim 9, wherein the components comprise one or more gas solenoid valves (34; 36) configured to provide the one or more gases from the one or more gas sources (54; 56) to the GLAD (32).

14. The in-line gas liquid infusion smart system (10; 30; 60) according to claim 13, wherein the components comprise one or more gas pressure sensors (40; 42) configured to provide gas pressure sensor signaling containing information about one or more gas pressures of the one or more gases provided to the GLAD (32).

15. The in-line gas liquid infusion smart system (10; 30; 60) according to claim 9, wherein the components comprise a non-infused liquid solenoid valve (44) configured to provide the non-infused liquid from the GLAD (32) to the dispense point (38), and also comprises a mixture solenoid valve (46) configured to provide the gas-infused mixture to the dispense point (38).

## Patentansprüche

1. Ein intelligentes Inline-Gas-Flüssigkeits-Infusionssystem (10; 30; 60), umfassend:
Komponenten, die ausgebildet sind, eine nicht infundierte Flüssigkeit und ein gasinfundiertes Gemisch aus Gas und Flüssigkeit an einer Abgabestelle (38) des intelligenten Inline-Gas-Flüssigkeits-Infusionssystems (10; 30; 60) abzugeben,
eine entfernte Steueranordnung zur Steuerung, Überwachung und Fehlerbehebung des intelligenten Inline-Gas-Flüssigkeits-Infusionssystems (10; 30; 60) sowie
eine intelligente Steuerung (11) mit einem Signalprozessor (11a), der ausgebildet ist,
Signale zu empfangen, die Informationen über Parameter oder Einstellungen im Zusammenhang mit der Abgabe der nicht infundierten Flüssigkeit und des gasinfundierten Gemischs an der Abgabestelle (38) enthalten; und
abhängig von den empfangenen Signalen, entsprechende Signale zu ermitteln, die Informationen zu der Abgabe der nicht infundierten Flüssigkeit und des gasinfundierten Gemischs an der Abgabestelle (38) enthalten und ferner weitere Informationen über die Parameter oder Einstellungen zur Bereitstellung an die entfernte Steueranordnung enthalten, und
die entsprechenden Signale als Steuersignale bereitzustellen, um die Komponenten des intelligenten Inline-Gas-Flüssigkeits-Infusionssystems (10; 30; 60) zu steuern, um die nicht infundierte Flüssigkeit und das gasinfundierte Gemisch an der Abgabestelle (38) abzugeben, sowie ferner der entfernten Steueranordnung Datenkommunikationssignale bereitzustellen, und
wobei die entfernte Steueranordnung ausgebildet ist,
die entsprechenden Signale zu empfangen und
entfernte Steueranordnungssignale bereitzustellen, die weitere entsprechende Informationen über Steuerung, Überwachung und Fehlerbehebung der Komponenten in dem intelligenten Inline-Gas-Flüssigkeits-Infusionssystem (10; 30; 60) enthalten, einschließlich einer Änderung von einem oder mehreren der Parameter oder Einstellungen, die sich auf den Betrieb von Komponenten in dem intelligenten Inline-Gas-Flüssigkeits-Infusionssystem (10; 30; 60) beziehen;
wobei die intelligente Steuerung (11) ausgebildet ist, die entfernten Steueranordnungssignale zu empfangen und die entsprechenden Signale auf der Grundlage der entfernten Steueranordnungssignale zu ermitteln, um die nicht infundierte Flüssigkeit und das gasinfundierte Gemisch an der Abgabestelle (38) abzugeben, und
wobei die Parameter oder Einstellungen Gas-Flüssigkeits-Infundierungs-Einstellungen, Pumpenbetriebsparameter, Abgabeinformationen und Systemparameter umfassen.

2. Das intelligente Inline-Gas-Flüssigkeits-Infusionssystem (10; 30; 60) nach Anspruch 1, wobei die intelligente Steuerung (11) ausgebildet ist, die Signale und die entsprechenden Signale mit der entfernten Steueranordnung über einen lokalen Netzwerk-Zugangsknoten (20) an einen Cloud-Server (22) auszutauschen.

3. Das intelligente Inline-Gas-Flüssigkeits-Infusionssystem (10; 30; 60) nach Anspruch 1, wobei
die Pumpenbetriebsparameter Geschwindigkeit, Spannung, Stromstärke und Druck einer Pumpe (12) umfassen, die die nicht infundierte Flüssigkeit an eine Gas-Flüssigkeits-Absorptionsvorrichtung (32), im Folgenden als GLAD bezeichnet, liefert;
die Abgabeinformationen einen Zeitstempel für die Abgabe und eine Getränkesorte des abgegebenen gasinfundierten Gemisches sowie einen Fasswechsel der verarbeiteten Flüssigkeit oder des verarbeiteten Gases umfassen; und
die Systemparameter einen Gasdruck und einen Flüssigkeitsdruck der verarbeiteten Flüssigkeit oder des verarbeiteten Gases sowie einen Betriebsmodus des intelligenten Inline-Gas-Flüssigkeits-Infusionssystems (10; 30; 60) umfassen.

4. Das intelligente Inline-Gas-Flüssigkeits-Infusionssystem (10; 30; 60) nach Anspruch 1, wobei die entfernte Steueranordnung ausgebildet ist,
Geschäftsanalysedatensignale zu ermitteln, die Informationen über Geschäftsanalysedaten enthalten, einschließlich Informationen über:
- Produktverbrauchsinformationen,
- Leistungsverbrauchsinformationen,
- Spitzenlastzeiteninformationen und
- Lagerbestandsverwaltungsinformationen.

5. Das intelligente Inline-Gas-Flüssigkeits-Infusionssystem (10; 30; 60) nach Anspruch 1, wobei die entfernte Steueranordnung ausgebildet ist,
technische Fehlerbehebungsdatensignale zu ermitteln, die Informationen über technische Fehlerbehebungsdaten zur Steuerung des intelligenten Inline-Gas-Flüssigkeits-Infusionssystems (10; 30; 60) enthalten, einschließlich:
- Pumpen-Verhalten und -Lebenserwartung,
- Änderungen von Systembetriebsparametern und
- Abfolgen von letzten Betriebsmodi; und
wobei vorzugsweise die entfernte Steueranordnung ausgebildet ist,
entfernte Nutzereingabesignale zu empfangen, die Informationen über die Änderung von einem oder mehreren der Parameter oder Einstellungen von einer oder mehreren Komponenten in dem intelligenten Inline-Gas-Flüssigkeits-Infusionssystem (10; 30; 60) enthalten; und
entfernte Steueranordnungssignale bereitzustellen, die die entsprechenden weiteren Informationen zur Steuerung, Überwachung oder Fehlerbehebung der Komponenten in dem intelligenten Inline-Gas-Flüssigkeits-Infusionssystem (10; 30; 60) enthalten, einschließlich einer Änderung von einem oder mehreren Parametern oder Einstellungen, die sich auf den Betrieb der Komponenten in dem intelligenten Inline-Gas-Flüssigkeits-Infusionssystem (10; 30; 60) beziehen, zur Bereitstellung an die intelligente Steuerung (11).

6. Das intelligente Inline-Gas-Flüssigkeits-Infusionssystem (10; 30; 60) nach Anspruch 1, wobei das gasinfundierte Gemisch ein mit Gas angereichertes Getränk ist; das Gas Stickstoff (N2), Kohlendioxid (CO2) oder beides umfasst; und das mit Gas angereicherte Getränk ein mit N2 angereichertes Getränk, ein mit CO2 angereichertes Getränk oder ein mit N2 und CO2 angereichertes Getränk umfasst.

7. Das intelligente Inline-Gas-Flüssigkeits-Infusionssystem (10; 30; 60) nach Anspruch 1, wobei das gasinfundierte Gemisch ein mit Gas angereichertes Getränk ist; wobei die nicht infundierte Flüssigkeit Kaffee, Tee, Milch, Bier, Limonade, Saft, Wasser, Wein oder Spirituosen umfasst; und das mit Gas angereicherte Getränk ein mit Gas angereichertes Kaffee-, Tee-, Milch-, Bier-, Limonaden-, Saft-, Wasser-, Wein- oder Spirituosengetränk umfasst.

8. Das intelligente Inline-Gas-Flüssigkeits- Infusionssystem (10; 30; 60) nach Anspruch 1, wobei das intelligente Inline-Gas-Flüssigkeits-Infusionssystem (10; 30; 60) ein industrielles System ist; das gasinfundierte Gemisch ein gasinfundiertes industrielles Gemisch mit einem gewünschten Verhältnis von einem oder mehreren Gasen zu Flüssigkeiten für eine industrielle Prozessanwendung ist.

9. Das intelligente Inline-Gas-Flüssigkeits-Infusionssystem (10; 30; 60) nach Anspruch 1, wobei das intelligente Inline-Gas-Flüssigkeits-Infusionssystem (10; 30; 60) Komponenten umfasst, die eine Gas-Flüssigkeits-Absorptionsvorrichtung (32), im Folgenden als GLAD bezeichnet, umfasst, die ausgebildet ist, die nicht infundierte Flüssigkeit von einer Flüssigkeitsquelle (52) entgegenzunehmen, ein oder mehrere Gase von einer oder mehreren Gasquellen (54; 56) entgegenzunehmen und die nicht infundierte Flüssigkeit und das gasinfundierte Gemisch an die Abgabestelle (38) zu liefern, und wobei vorzugsweise die Flüssigkeitsquelle (52) eine Pumpe (12; 62) umfasst, einschließlich einer motor- oder luftbetriebenen Membranpumpe, die ausgebildet ist, die Flüssigkeit zu der GLAD (32) zu pumpen.

10. Das intelligente Inline-Gas-Flüssigkeits-Infusionssystem (10; 30; 60) nach Anspruch 9, wobei die Komponenten ein Gasmagnetventil (70) umfassen, das ausgebildet ist, ein Gas aus einer Gasquelle (66) zum Antrieb der gasbetriebenen Membranpumpe (62) bereitzustellen.

11. Das intelligente Inline-Gas-Flüssigkeits-Infusionssystem (10; 30; 60) nach Anspruch 9, wobei die Komponenten einen Gasdrucksensor (68) umfassen, der ausgebildet ist, Gasdrucksensorsignale bereitzustellen, die Informationen über den Druck des Gases enthalten, das zum Antrieb der gasbetriebenen Membranpumpe (62) bereitgestellt ist.

12. Das intelligente Inline-Gas-Flüssigkeits-Infusionssystem (10; 30; 60) nach Anspruch 9, wobei die Komponenten ein Leitungssystem umfassen, das ausgebildet ist, ein von der gasbetriebenen Membranpumpe (62) geliefertes Abgas an eine die Gase bereitstellende Gasquelle (54; 56) zu liefern und zu recyceln.

13. Das intelligente Inline-Gas-Flüssigkeits-Infusionssystem (10; 30; 60) nach Anspruch 9, wobei die Komponenten ein oder mehrere Gasmagnetventile (34; 36) umfassen, die ausgebildet sind, das eine oder die mehreren Gase von der einen oder den mehreren Gasquellen (54; 56) an die GLAD (32) zu liefern.

14. Das intelligente Inline-Gas-Flüssigkeits-Infusionssystem (10; 30; 60) nach Anspruch 13, wobei die Komponenten einen oder mehrere Gasdrucksensoren (40; 42) umfassen, die ausgebildet sind, Gasdrucksensorsignale bereitzustellen, die Informationen über einen oder mehrere Gasdrücke der einen oder mehreren Gase enthalten, die der GLAD (32) zur Verfügung gestellt werden.

15. Das intelligente Inline-Gas-Flüssigkeits-Infusionssystem (10; 30; 60) nach Anspruch 9, wobei die Komponenten ein Magnetventil (44) für die nicht infundierte Flüssigkeit umfassen, das ausgebildet ist, der Abgabestelle (38) die nicht infundierte Flüssigkeit von der GLAD (32) bereitzustellen, und ferner ein Magnetventil (46) für das Gemisch umfasst, das ausgebildet ist, der Abgabestelle (38) das gasinfundierte Gemisch bereitzustellen.

## Revendications

1. Système intelligent d'infusion en ligne de gaz et de liquide (10 ; 30 ; 60), comprenant :
des composants adaptés pour distribuer un liquide non infusé et un mélange de gaz et de liquide infusé à partir d'un point de distribution (38) du système intelligent d'infusion en ligne de gaz et de liquide (10 ; 30 ; 60),
un contrôleur à distance pour commander, surveiller et dépanner le système intelligent d'infusion en ligne de gaz et de liquide (10 ; 30 ; 60), et
un contrôleur intelligent (11) comportant un processeur de signaux (11a) configuré pour
recevoir des signaux contenant des informations sur des paramètres ou des réglages liés à la distribution, à partir du point de distribution (38), du liquide non infusé et du mélange infusé de gaz ; et
déterminer des signaux correspondants contenant des informations pour distribuer le liquide non infusé et le mélange infusé de gaz à partir du point de distribution (38), et contenant également des informations supplémentaires concernant les paramètres ou les réglages à fournir au contrôleur à distance, sur la base des signaux reçus, et
fournir les signaux correspondants en tant que signaux de commande pour commander les composants du système intelligent d'infusion en ligne de gaz et de liquide (10 ; 30 ; 60) afin de distribuer le liquide non infusé et le mélange infusé de gaz à partir du point de distribution (38), ainsi que des signaux de communication de données vers le contrôleur à distance, et
dans lequel le contrôleur à distance est configuré pour
recevoir les signaux correspondants, et
fournir des signaux de contrôleur à distance contenant des informations supplémentaires correspondantes concernant la commande, la surveillance et le dépannage des composants du système intelligent d'infusion en ligne de gaz et de liquide (10 ; 30 ; 60), y compris la modification d'un ou plusieurs des paramètres ou réglages liés au fonctionnement des composants du système intelligent d'infusion en ligne de gaz et de liquide (10 ; 30 ; 60) ;
dans lequel le contrôleur intelligent (11) est configuré pour recevoir les signaux de contrôleur à distance et déterminer les signaux correspondants afin de distribuer le liquide non infusé et le mélange infusé de gaz à partir du point de distribution (38), sur la base des signaux de contrôleur à distance, et
dans lequel les paramètres ou réglages comprennent des réglages d'infusion gaz-liquide, des paramètres de fonctionnement de la pompe, des informations de distribution et des paramètres du système.

2. Système intelligent d'infusion en ligne de gaz et de liquide (10 ; 30 ; 60) selon la revendication 1, dans lequel le contrôleur intelligent (11) est configuré pour échanger les signaux et les signaux correspondants avec le contrôleur à distance via une passerelle de réseau local (20) vers un serveur cloud (22).

3. Système intelligent d'infusion en ligne de gaz et de liquide (10 ; 30 ; 60) selon la revendication 1, dans lequel
les paramètres de fonctionnement de la pompe comprennent la vitesse, la tension, le courant et la pression d'une pompe (12) fournissant le liquide non infusé à un dispositif d'absorption de gaz et de liquide (32), ci-après dénommé GLAD ;
les informations de distribution comprennent un horodatage de la distribution et un type de boisson du mélange gaz-liquide distribué, ainsi qu'un changement de fût d'un liquide ou d'un gaz traité ; et
les paramètres du système comprennent une pression de gaz et une pression de liquide du liquide ou du gaz traité, ainsi qu'un mode de fonctionnement du système intelligent d'infusion en ligne de gaz et de liquide (10 ; 30 ; 60).

4. Système intelligent d'infusion en ligne de gaz et de liquide (10 ; 30 ; 60) selon la revendication 1, dans lequel le contrôleur à distance est configurée pour
déterminer des signaux de données d'analyse commerciale contenant des informations sur les données d'analyse commerciale, y compris des informations sur :
- la consommation de produits,
- la consommation d'énergie,
- les heures de pointe de la demande, et
- la gestion des stocks.

5. Système intelligent d'infusion en ligne de gaz et de liquide (10 ; 30 ; 60) selon la revendication 1, dans lequel le contrôleur à distance est configuré pour
déterminer des signaux de données de dépannage technique contenant des informations sur des données de dépannage technique pour contrôler le système intelligent d'infusion en ligne de gaz et de liquide (10 ; 30 ; 60), y compris :
- un comportement des pompes et leur durée de vie,
- des modifications des paramètres de fonctionnement du système, et
- des séquences des derniers modes de fonctionnement ; et
dans lequel, de préférence, le contrôleur à distance est configuré pour
recevoir des signaux d'entrée d'utilisateur à distance contenant des informations sur la modification d'un ou plusieurs paramètres ou réglages d'un ou plusieurs composants du système intelligent d'infusion en ligne de gaz et de liquide (10 ; 30 ; 60) ; et
fournir des signaux de contrôleur à distance contenant les informations supplémentaires correspondantes concernant le contrôle, la surveillance ou le dépannage des composants du système intelligent d'infusion en ligne de gaz et de liquide (10 ; 30 ; 60), y compris la modification d'un ou plusieurs paramètres ou réglages liés au fonctionnement des composants du système intelligent d'infusion en ligne de gaz et de liquide (10 ; 30 ; 60) afin de les fournir au contrôleur intelligent (11).

6. Système intelligent d'infusion en ligne de gaz et de liquide (10 ; 30 ; 60) selon la revendication 1, dans lequel le mélange infusé de gaz est une boisson infusée de gaz ; le gaz comprend de l'azote (N2), du dioxyde de carbone (CO2) ou les deux ; et la boisson infusée de gaz comprend une boisson infusée d'azote (N2), une boisson infusée de dioxyde de carbone (CO2) ou une boisson infusée d'azote (N2) et de dioxyde de carbone (CO2).

7. Système intelligent d'infusion en ligne de gaz et de liquide (10 ; 30 ; 60) selon la revendication 1, dans lequel le mélange infusé de gaz est une boisson gazéifiée ; le liquide non gazéifié comprend du café, du thé, du lait, de la bière, des sodas, des jus, de l'eau, du vin ou des spiritueux ; et la boisson gazéifiée comprend une boisson gazéifiée à base de café, de thé, de lait, de bière, de sodas, de jus, d'eau, de vin ou de spiritueux.

8. Système intelligent d'infusion en ligne de gaz et de liquide (10 ; 30 ; 60) selon la revendication 1, dans lequel le système intelligent d'infusion en ligne de gaz et de liquide (10 ; 30 ; 60) est un système industriel ; le mélange infusé de gaz est un mélange industriel gazéifié présentant un rapport souhaité d'un ou plusieurs gaz et liquides pour une application de procédé industriel.

9. Système intelligent d'infusion en ligne de gaz et de liquide (10 ; 30 ; 60) selon la revendication 1, dans lequel le système intelligent d'infusion en ligne de gaz et de liquide (10 ; 30 ; 60) comprend des composants qui incluent un dispositif d'absorption de gaz et de liquide (32), ci-après dénommé GLAD, configuré pour recevoir le liquide non infusé provenant d'une source de liquide (52), recevoir un ou plusieurs gaz provenant d'une ou plusieurs sources de gaz (54 ; 56), et à fournir le liquide non infusé et le mélange infusé de gaz au point de distribution (38), et dans lequel, de préférence, la source de liquide (52) comprend une pompe (12 ; 62), comprenant une pompe à membrane entraînée par un moteur ou par air, configurée pour pomper le liquide vers le GLAD (32).

10. Système intelligent d'infusion en ligne de gaz et de liquide (10 ; 30 ; 60) selon la revendication 9, dans lequel les composants comprennent une électrovanne de gaz (70) configurée pour fournir un gaz provenant d'une source de gaz (66) afin d'entraîner la pompe à membrane à commande pneumatique (62).

11. Système intelligent d'infusion en ligne de gaz et de liquide (10 ; 30 ; 60) selon la revendication 9, dans lequel les composants comprennent un capteur de pression de gaz (68) configuré pour fournir un signal de capteur de pression de gaz contenant des informations sur la pression du gaz fourni pour entraîner la pompe à membrane à entraînement pneumatique (62).

12. Système intelligent d'infusion en ligne de gaz et de liquide (10 ; 30 ; 60) selon la revendication 9, dans lequel les composants comprennent des tubulures configurées pour fournir et recycler un gaz d'échappement provenant de la pompe à membrane à entraînement pneumatique (62) vers une source de gaz (54 ; 56) fournissant les gaz.

13. Système intelligent d'infusion en ligne de gaz et de liquide (10 ; 30 ; 60) selon la revendication 9, dans lequel les composants comprennent une ou plusieurs électrovannes de gaz (34 ; 36) configurées pour fournir le ou les gaz provenant de la ou des sources de gaz (54 ; 56) au GLAD (32).

14. Système intelligent d'infusion en ligne de gaz et de liquide (10 ; 30 ; 60) selon la revendication 13, dans lequel les composants comprennent un ou plusieurs capteurs de pression de gaz (40 ; 42) configurés pour fournir des signaux de capteur de pression de gaz contenant des informations sur une ou plusieurs pressions de gaz desdits un ou plusieurs gaz fournis au GLAD (32).

15. Système intelligent d'infusion en ligne de gaz et de liquide (10 ; 30 ; 60) selon la revendication 9, dans lequel les composants comprennent une électrovanne de liquide non infusé (44) configurée pour fournir le liquide non infusé depuis le GLAD (32) vers le point de distribution (38), et comprend également une électrovanne de mélange (46) configurée pour fournir le mélange infusé de gaz vers le point de distribution (38).
